# EUROPÄISCHE PATENTANMELDUNG

(11) **EP 4 443 141 A1**
(43) Veröffentlichungstag der Anmeldung: **09.10.2024**
(21) Anmeldenummer: 23166884.9
(22) Anmeldetag: 05.04.2023
(51) Int. Cl.: G01N 21/88, G01N 21/95, G01B 11/30

(54) **SYSTEM UND VERFAHREN ZUM PRÜFEN VON OBERFLÄCHENDEFEKTEN AUF EINEM PRÜFOBJEKT**

(71) Anmelder: Fraunhofer-Gesellschaft zur Förderung der angewandten Forschung e.V., 80686 München (DE)
(72) Erfinder: BASLER, Carl, 80686 München (DE); REGINA, David Joel, 80686 München (DE); LUTZ, Christian, 80686 München (DE)
(74) Vertreter: WSL Patentanwälte Partnerschaft mbB

(57) **Zusammenfassung**

Die vorliegende Erfindung betrifft ein System (1) zum Prüfen einer Oberfläche eines Prüfkörpers (3), wobei das System aufweist: Eine erste Quelle (4) und eine zweite Quelle (5), wobei die erste Quelle und die zweite Quelle derart ausgestaltet sind, dass die erste Quelle in einem Betrieb des Systems eine erste elektromagnetische Strahlung in einem ersten Wellenlängenbereich und die zweite in einem zweiten Wellenlängenbereich abstrahlt, wobei die erste und die zweite Quelle derart angeordnet sind, dass sie aus einer ersten und aus einer zweiten Beleuchtungsrichtung beleuchten (7, 8), und wobei die erste und die zweite Beleuchtungsrichtung voneinander verschieden sind, eine erste Kamera (12) zum Erfassen eines ersten Bildes des Prüfkörpers aus einer ersten Beobachtungsrichtung (13) und eine Auswerteeinrichtung (15), wobei die Auswerteeinrichtung derart wirksam mit der ersten Kamera verbunden ist, dass sie einen das von der ersten Kamera erfasste erste Bild beschreibenden ersten Bilddatensatz erhält. Erfindungsgemäß wird vorgeschlagen, dass die Auswerteeinrichtung derart eingerichtet ist, dass sie aus einem Datenmodel (16) des Prüfkörpers einen ersten Referenzbilddatensatz simuliert, der eine Beleuchtung des Prüfkörpers aus der ersten Beleuchtungsrichtung und eine Beleuchtung des Prüfkörpers aus der zweiten Beleuchtungsrichtung und eine Bilderfassung aus der ersten Beobachtungsrichtung berücksichtigt, und ein erstes Fehlersignal aus einem Vergleich zwischen dem ersten Bilddatensatz und dem ersten Referenzbilddatensatz erzeugt.

## Beschreibung

Die vorliegende Erfindung betrifft ein System zum Prüfen einer Oberfläche eines Prüfkörpers, wobei das System aufweist: Eine erste Quelle und eine zweite Quelle, wobei die erste Quelle und die zweite Quelle derart ausgestaltet sind, dass die erste Quelle in einem Betrieb des Systems eine erste elektromagnetische Strahlung in einem ersten Wellenlängenbereich erzeugt und abstrahlt und die zweite Quelle in dem Betrieb des Systems eine zweite elektromagnetische Strahlung in einem zweiten Wellenlängenbereich erzeugt und abstrahlt, wobei die erste Quelle derart angeordnet ist, dass die erste Quelle in dem Betrieb des Systems den Prüfkörper aus einer ersten Beleuchtungsrichtung beleuchtet, wobei die zweite Quelle derart angeordnet ist, dass die zweite Quelle in dem Betrieb des Systems den Prüfkörper aus einer zweiten Beleuchtungsrichtung beleuchtet, wobei die erste und die zweite Beleuchtungsrichtung voneinander verschieden sind, eine erste Kamera zum Erfassen eines ersten Bildes des Prüfkörpers aus einer ersten Beobachtungsrichtung und eine Auswertungseinrichtung, wobei die Auswertungseinrichtung derart wirksam mit der ersten Kamera verbunden ist, dass die Auswertungseinrichtung in dem Betrieb des Systems einen das von der ersten Kamera erfasste erste Bild beschreibenden ersten Bilddatensatz erhält.

Die Erfindung betrifft zudem auch ein Verfahren zum Prüfen einer Oberfläche eines Prüfkörpers, wobei das Verfahren die Schritte umfasst: Beleuchten des Prüfkörpers mit einer ersten elektromagnetischen Strahlung in einem ersten Wellenlängenbereich aus einer ersten Beleuchtungsrichtung, Beleuchten des Prüfkörpers mit einer zweiten elektromagnetischen Strahlung in einem zweiten Wellenlängenbereich aus einer zweiten Beleuchtungsrichtung, wobei die erste und die zweite Beleuchtungsrichtung voneinander verschieden sind, und Erfassen eines ersten Bildes des Prüfkörpers aus einer ersten Beobachtungsrichtung.

Oberflächen von Prüfkörpern, die komplexe Formen aufweisen und in hoher Stückzahl gefertigt werden oder gar als Schüttgut vorliegen, sind schwer automatisiert zu prüfen. Ungänzen auf der jeweiligen Oberfläche eines Prüfkörpers wie Dellen, Schlagstellen, Unterfüllungen oder andere Defekte sind bei einer automatisierten Prüfung meist nicht von Verunreinigungen, Farbänderungen oder von einer Abweichung der Oberflächenrauigkeit zu unterscheiden.

Aus dem Stand der Technik sind auch Ansätze bekannt, die auf der Aufnahme und der Auswertung von Bildern eines Prüfkörpers mithilfe von Kameras beruhen. Diese automatisierte Prüfung gerät an ihre Grenzen, wenn die Prüfkörper sehr schnell aufeinander folgen und dabei eine völlig undefinierte Pose aufweisen. Daher muss für die meisten auf einer Bilderzeugung beruhenden Prüfverfahren ein Prüfkörper vor einer Quelle für elektromagnetische Strahlung definiert um eine Mehrzahl von Achsen gedreht werden. Dies ist zeitaufwendig.

Eine sehr zuverlässige Prüfung wird nach wie vor mit einer visuellen Prüfung durch einen Sichtprüfer erzielt. Der Sichtprüfer dreht den jeweiligen Prüfkörper unter seitlichem Lichteinfall und beobachtet die sich ändernde Helligkeit aufgrund der Lichtreflexion oder -streuung. Die nach wie vor herausragende Qualität einer Sichtprüfung ist insbesondere darauf zurückzuführen, dass ein Sichtprüfer über Erfahrung verfügt, die es ihm ermöglicht, zwischen echten Defekten und beispielsweise reinen Verfärbungen der Oberfläche des Prüfkörpers zu unterscheiden.

Gegenüber diesem Stand der Technik ist es eine Aufgabe der vorliegenden Erfindung, ein System und ein Verfahren zum Prüfen einer Oberfläche eines Prüfkörpers bereitzustellen, die eine schnelle Prüfung ermöglichen. Darüber hinaus ist es eine Aufgabe der vorliegenden Erfindung, ein System und ein Verfahren bereitzustellen, die eine zuverlässige Prüfung ermöglichen.

Zumindest eine der zuvor genannten Aufgaben wird durch ein System gemäß dem beigefügten unabhängigen Anspruch 1 gelöst. Dazu ist die Auswertungseinrichtung des Systems der eingangs genannten Art derart eingerichtet, dass die Auswertungseinrichtung in dem Betrieb des Systems aus einem Datenmodell des Prüfkörpers einen ersten Referenzbilddatensatz simuliert, der eine Beleuchtung des Prüfkörpers aus der ersten Beleuchtungsrichtung und eine Beleuchtung des Prüfkörpers aus der zweiten Beleuchtungsrichtung und eine Bilderfassung aus der ersten Beobachtungsrichtung berücksichtigt und ein erstes Fehlersignal aus einem Vergleich zwischen dem ersten Bilddatensatz und dem ersten Referenzbilddatensatz erzeugt.

Es ist die der Erfindung zugrunde liegende Idee, dem von der Kamera erfassten ersten Bild eine definierte Beleuchtungssituation mit der ersten elektromagnetischen Strahlung und der zweiten elektromagnetischen Strahlung aus zwei ausgezeichneten, voneinander verschiedenen ersten und zweiten Beleuchtungsrichtungen zugrunde zu legen. Eine solche definierte Beleuchtungssituation lässt sich mit vertretbarem Rechenaufwand simulieren. Der simulierte erste Referenzbilddatensatz dient dann als Basis für einen Sollwertabgleich und für die Erzeugung eines Fehlersignals.

Entscheidend für die Simulation ist, dass das simulierte physikalische System aus der ersten, der zweiten Quelle und optional jeder weiteren Quelle sowie der von diesen Quellen erzeugten elektromagnetischen Strahlungen und aus der ersten Kamera und optional jeder weiteren Kamera ausreichend definiert ist, so dass dieses physikalische System der Simulation zugrunde gelegt werden kann. Insbesondere müssen die erste und die zweite Beleuchtungsrichtung und die erste Beobachtungsrichtung der Simulation zugrunde gelegt werden.

In einer Ausführungsform der Erfindung wird der erste Referenzbilddatensatz simuliert durch ein Raycasting oder ein Raytracing.

In einer Ausführungsform wird für ein Datenmodell des Prüfkörpers, beispielsweise ein CAD-Modell, simuliert, wie ein zu erwartendes erstes Bild der ersten Kamera idealerweise aussieht. Dieses zu erwartende erste Bild bildet dann den ersten Referenzbilddatensatz. Die Auswertungseinrichtung vergleicht den ersten Referenzbilddatensatz mit dem ersten Bilddatensatz. Dann wird ein Fehlersignal berechnet, welches ein Maß für eine Abweichung zwischen dem ersten Bilddatensatz und dem ersten Referenzbilddatensatz angibt. In einer Ausführungsform beschreibt das Fehlersignal auch den Ort einer Abweichung auf dem Prüfkörper zwischen dem ersten Referenzbilddatensatz und dem ersten Bilddatensatz.

In einer weiteren Ausführungsform umfasst das System mehr als zwei Quellen für elektromagnetische Strahlung. In einer Ausführungsform der Erfindung weist das System daher eine dritte Quelle auf, wobei die dritte Quelle derart ausgestaltet ist, dass die dritte Quelle in dem Betrieb des Systems eine dritte elektromagnetische Strahlung in einem dritten Wellenlängenbereich erzeugt und abstrahlt, wobei die dritte Quelle derart angeordnet ist, dass die dritte Quelle in dem Betrieb des Systems den Prüfkörper aus einer dritten Beleuchtungsrichtung beleuchtet, und wobei die dritte Beleuchtungsrichtung von der ersten und der zweiten Beleuchtungsrichtung verschieden ist.

In einer Ausführungsform der Erfindung weist das System mehr als drei Quellen auf.

In einer Ausführungsform der Erfindung ist das System derart ausgestaltet, dass die erste elektromagnetische Strahlung und die zweite elektromagnetische Strahlung und optional auch die dritte elektromagnetische Strahlung beim Erfassen mit der ersten Kamera voneinander unterscheidbar sind.

Dabei sind in einer Ausführungsform die elektromagnetischen Strahlungen aller Quellen voneinander unterscheidbar.

Eine Unterscheidbarkeit der ersten elektromagnetischen Strahlung und der zweiten elektromagnetischen Strahlung und optional der dritten elektromagnetischen Strahlung kann auf verschiedene Arten gewährleistet werden. In einer Ausführungsform der Erfindung erfolgt das Beleuchten des Prüfkörpers mit der ersten elektromagnetischen Strahlung und der zweiten elektromagnetischen Strahlung und optional mit der dritten elektromagnetischen Strahlung zu verschiedenen Zeiten, sodass der Prüfkörper entweder mit der ersten elektromagnetischen Strahlung oder mit der zweiten elektromagnetischen Strahlung oder mit der dritten elektromagnetischen Strahlung beleuchtet wird. Jeder Bilddatensatz, insbesondere aber der erste Bilddatensatz, beschreibt dann genau genommen zwei bzw. drei Bilder, nämlich ein Bild, welches mit der ersten elektromagnetischen Strahlung erzeugt wurde, ein erstes Bild, welches mit der zweiten elektromagnetischen Strahlung beleuchtet wurde und ggf. ein drittes Bild, welches mit der zweiten elektromagnetischen Strahlung beleuchtet wurde. Stellt man dann beispielsweise in dem ersten Bilddatensatz die zwei bzw. drei Bilder mit unterschiedlichen Farben dar, so lassen sich beispielsweise Schlagstellen dadurch erkennen, dass eine Schlagstelle eine andere Farbe aufweist als ihre Umgebung.

In einer Ausführungsform sind der erste Wellenlängenbereich, der zweite Wellenlängenbereich und optional der dritte Wellenlängenbereich voneinander verschieden. Auch auf diese Weise sind die erste elektromagnetische Strahlung, die zweite elektromagnetische Strahlung und ggf. die dritte elektromagnetische Strahlung beim Erfassen mit der ersten Kamera voneinander unterscheidbar. Eine solche Wahl des ersten und des zweiten Wellenlängenbereichs und optional des dritten Wellenlängenbereichs ermöglicht es, die Bildauswertung genauso durchzuführen, wie dies zuvor für die zeitliche Unterscheidbarkeit zwischen der ersten elektromagnetischen Strahlung und der zweiten elektromagnetischen Strahlung und optional der dritten elektromagnetischen Strahlung beschrieben wurde. Allerdings ist es möglich, alle Bilder des ersten Bilddatensatzes gleichzeitig zu erfassen.

In einer Ausführungsform wird bei der Simulation des Referenzbilddatensatzes der erste Wellenlängenbereich, der zweite Wellenlängenbereich und optional der dritte Wellenlängenbereich berücksichtigt.

In einer Ausführungsform der Erfindung sind die Wellenlängenbereiche aller von den Quellen erzeugten elektromagnetischen Strahlungen voneinander verschieden.

In einer Ausführungsform, bei welcher das System mehr als drei Quellen aufweist, weist jede der drei Quellen dennoch nur einen der drei Wellenlängenbereiche auf, sodass alle Wellenlängenbereiche getrennt von einer Farbkamera erfasst werden können. Daher weist in einer Ausführungsform der Erfindung das System eine Anzahl N von ersten Quellen, die erste elektromagnetische Strahlung in dem ersten Wellenlängenbereich erzeugen und abstrahlen, eine Anzahl N von Quellen, die zweite elektromagnetische Strahlung in dem zweiten Wellenlängenbereich erzeugen und abstrahlen, und eine Anzahl N von dritten Quellen auf, die dritte elektromagnetische Strahlung in dem dritten Wellenlängenbereich erzeugen und abstrahlen. Dies Gesamtanzahl von Quellen ist in einer solchen Ausführungsform ein ganzzahliges Vielfaches N von Drei.

In einer Ausführungsform der Erfindung weist der erste Wellenlängenbereich eine erste Schwerpunktwellenlänge und der zweite Wellenlängenbereich weist eine zweite Schwerpunktwellenlänge und der optionale dritte Wellenlängenbereich weist eine dritte Schwerpunktwellenlänge auf. Dabei sind die erste und die zweite und optional die dritte Schwerpunktwellenlänge voneinander verschieden.

In einer Ausführungsform der Erfindung sind die Quellen des erfindungsgemäßen Systems derart ausgestaltet, dass sie in dem Betrieb des Systems elektromagnetische Strahlung mit einem gerichteten Anteil erzeugen und abstrahlen. In einer Ausführungsform sind die Quellen des erfindungsgemäßen Systems derart ausgestaltet, dass sie in dem Betrieb des Systems gerichtete elektromagnetische Strahlung erzeugen und abstrahlen. Auf diese Weise wird eine definierte Beleuchtungsrichtung bereitgestellt, die sich in der Auswertungseinrichtung auch simulieren lässt. Dabei wird gerichtete elektromagnetische Strahlung in der vorliegenden Anmeldung als Gegensatz zu diffuser elektromagnetischer Strahlung verstanden.

In einer Ausführungsform der Erfindung schließen jeweils zwei Beleuchtungsrichtungen von elektromagnetischer Strahlung mit voneinander verschiedenen Wellenlängenbereichen einen Winkel in einem Bereich von 30° bis 150° ein.

In einer Ausführungsform der Erfindung ist die erste Kamera eine Farbkamera mit einer Mehrzahl von Pixeln. Dabei weist jeder aus der Mehrzahl von Pixeln mindestens zwei für jeweils einen Sensorwellenlängenbereich sensitive Sensoren auf, wobei die Sensorwellenlängenbereiche der zwei Sensoren voneinander verschieden sind. In einer Ausführungsform weist jeder aus der Mehrzahl von Pixeln genau drei für jeweils einen Sensorwellenlängenbereich sensitive Sensoren auf, wobei die Sensorwellenlängenbereiche der drei Sensoren voneinander verschieden sind.

Eine derartige Ausführungsform ist gut mit einer kommerziell erhältlichen Farbkamera, beispielsweise einer CCD- oder CMOS-Kamera, realisierbar. In einer solchen Farbkamera weisen die drei Sensoren typischerweise drei Filter für rotes, grünes und blaues Licht auf, um einen Bilddatensatz zu erzeugen, der eine möglichst vollständige Beschreibung des Bildes im R-G-B-Farbraum darstellt.

Manche der sich aus der vorliegenden Erfindung ergebenden Vorteile lassen sich bereits realisieren, wenn nur von einer Kamera, nämlich der ersten Kamera, ein erstes Bild aus der ersten Beobachtungsrichtung erfasst wird. Dennoch weist das System in einer Ausführungsform eine Mehrzahl von Kameras auf, welche ein Bild des Prüfkörpers aus einer Mehrzahl von voneinander verschiedenen Beobachtungsrichtungen erfassen.

In einer Ausführungsform der Erfindung weist das System daher eine zweite Kamera zum Erfassen eines zweiten Bildes des Prüfkörpers aus einer zweiten Beobachtungsrichtung auf. Dabei ist die zweite Beobachtungsrichtung von der ersten Beobachtungsrichtung verschieden und die Auswertungseinrichtung ist derart wirksam auch mit der zweiten Kamera verbunden, dass die Auswertungseinrichtung in dem Betrieb des Systems einen von der zweiten Kamera erfassten, das zweite Bild beschreibenden zweiten Bilddatensatz enthält. Dabei ist die Auswertungseinrichtung derart eingerichtet, dass sie in dem Betrieb des Systems aus dem Datenmodell des Prüfkörpers einen zweiten Referenzbilddatensatz simuliert, der die Beleuchtung des Prüfkörpers aus der ersten Beleuchtungsrichtung, die Beleuchtung des Prüfkörpers aus der zweiten Beleuchtungsrichtung und eine Bilderfassung aus der zweiten Beobachtungsrichtung berücksichtigt. Die Auswertungseinrichtung erzeugt dann ein zweites Fehlersignal aus einem Vergleich zwischen dem zweiten Bilddatensatz und dem zweiten Referenzbilddatensatz.

In einer Ausführungsform weisen die erste und die zweite elektromagnetische Strahlung voneinander verschiedene Wellenlängenbereiche auf. In einer ersten Variante sind dann die erste Kamera und die zweite Kamera jeweils Farbkameras, so dass beide Kameras ein Farbbild und somit die erste elektromagnetische Strahlung und die zweite elektromagnetische Strahlung gleichzeitig aber mit getrennten Sensoren erfassen. In einer alternativen Variante erfasst die erste Kamera nur die erste elektromagnetische Strahlung und die zweite Kamera erfasst nur die zweite elektromagnetische Strahlung. Dazu ist beispielsweise vor der ersten und der zweiten Kamera jeweils ein Farbfilter angeordnet.

In einer Ausführungsform der Erfindung weist das System eine Einrichtung zum Erfassen zumindest einer Position oder einer Orientierung des Prüfkörpers relativ zu der ersten Kamera auf. Dabei ist die Auswertungseinrichtung derart wirksam mit der Einrichtung zum Erfassen zumindest der Position oder der Orientierung des Prüfkörpers verbunden, dass die Auswertungseinrichtung in den Betrieb des Systems eine Information über zumindest die Position oder die Orientierung des Prüfkörpers zu einem ersten Erfassungszeitpunkt des ersten Bildes erhält, wobei die Auswertungseinrichtung derart eingerichtet ist, dass die Auswertungseinrichtung in dem Betrieb des Systems den ersten Referenzbilddatensatz simuliert, wobei die Information über zumindest die Position oder die Orientierung des Prüfkörpers zu dem ersten Erfassungszeitpunkt berücksichtigt ist.

In einer Ausführungsform wird zumindest die Position oder die Orientierung des Prüfkörpers zu dem ersten Erfassungszeitpunkt des ersten Bildes, d.h. zeitgleich mit dem Erfassen des ersten Bildes, erfasst. Alternativ wird in einer Ausführungsform zumindest die Position oder die Orientierung des Prüfkörpers zeitlich vor dem ersten Erfassungszeitpunkt des ersten Bildes erfasst und dann von zumindest der erfassten Position oder der erfassten Orientierung auf zumindest die Position oder die Orientierung des Prüfkörpers zu dem ersten Erfassungszeitpunkt geschlossen. Die ist insbesondere dann möglich, wenn der Prüfkörper nach dem Erfassen zumindest der Position oder der Orientierung eine Translation (Änderung der Position relativ zu der ersten Kamera) aber keine Rotation (Änderung der Orientierung relativ zu der ersten Kamera) erfährt.

In Abhängigkeit von den Freiheitsgraden, welche der Prüfkörper im Hinblick auf seine Position und seine Orientierung relativ zu der ersten Kamera hat, kann es ausreichen, entweder die Position oder die Orientierung zu erfassen. In einer Ausführungsform jedoch muss die Pose des Prüfkörpers relativ zu der ersten Kamera, d.h. seine Position und seine Orientierung im Raum relativ zu der ersten Kamera, vollständig erfasst werden.

In einer Ausführungsform, bei welcher die Bilder der ersten Kamera für die verschiedenen Beleuchtungsrichtungen zu verschiedenen Erfassungszeitpunkten zeitlich nacheinander erfasst werden, werden zumindest die Position oder die Orientierung für jeden Erfassungszeitpunkt erfasst. In einer alternativen Ausführungsform wird von zumindest der erfassten Position oder der erfassten Orientierung des Prüfkörpers auf zumindest die Position oder die Orientierung des Prüfkörpers zu den Erfassungszeitpunkten geschlossen. Die ist insbesondere dann möglich, wenn der Prüfkörper zwischen zwei Erfassungszeitpunkten eine Translation (Änderung der Position relativ zu der ersten Kamera) aber keine Rotation (Änderung der Orientierung relativ zu der ersten Kamera) erfährt.

Die Einrichtung zum Erfassen zumindest der Positionen oder der Orientierung des Prüfkörpers ist in einer Ausführungsform eine zusätzliche Kamera, deren Bilddatensätze nicht für den Vergleich mit dem Referenzbilddatensatz herangezogen werden. In einer Ausführungsform jedoch umfasst die Einrichtung zum Erfassen zumindest der Position oder der Orientierung des Prüfkörpers die erste und/oder die zweite und/oder die dritte Kamera. In einer Ausführungsform der Erfindung wird ein Grauwertbild der ersten und/oder der zweiten und/oder der dritten Kamera zum Erfassen zumindest der Position oder der Orientierung des Prüfkörpers relativ zu der ersten Kamera verwendet.

In einer Ausführungsform der Erfindung weist das System eine Prüfstrecke mit zumindest einem auf der Prüfstrecke angeordneten Prüfpunkt und eine Prüfkörperzuführeinheit auf, wobei die Prüfkörperzuführeinheit derart eingerichtet ist, dass sie in dem Betrieb den Prüfkörper der Prüfstrecke zuführt, sodass sich der Prüfkörper auf der Prüfstrecke bewegt. Dabei sind die erste Quelle und die zweite Quelle und optional jede weitere Quelle derart eingerichtet und angeordnet, dass sie in dem Betrieb des Systems den Prüfkörper zumindest an dem Prüfpunkt mit der ersten elektromagnetischen Strahlung und der zweiten elektromagnetischen Strahlung und jeder weiteren elektromagnetischen Strahlung beleuchten. Dabei sind die erste Kamera, die zweite Kamera und optional jede zweite Kamera derart eingerichtet und angeordnet, dass sie in dem Betrieb des Systems den Prüfkörper zumindest an dem Prüfpunkt aus der ersten Beobachtungsrichtung und der zweiten Beobachtungsrichtung erfassen. Ein Beispiel für eine solche Prüfstrecke ist ein Transportband, auf welches das Prüfobjekt oder eine Mehrzahl von Prüfobjekten mithilfe der Prüfkörperzuführeinheit aufgebracht wird, und welches das Prüfobjekt zu dem Prüfpunkt und von diesem weg führt.

Daher umfasst das System in einer Ausführungsform ein Transportband, wobei der Prüfkörper auf dem Transportband anordenbar ist und wobei das Transportband derart ausgestaltet und angeordnet ist, dass es in den Betrieb des Systems im Prüfkörper entlang der Prüfstrecke führt.

In einer alternativen Ausführungsform weist die Objektzuführeinheit ein Fördermittel auf, wobei das Fördermittel ein Abwurfende aufweist, sodass das Prüfobjekt in dem Betrieb des Systems die Prüfstrecke entlangfliegt. Eine solche Prüfstrecke, auf der das Prüfobjekt entlangfliegt, beschreibt abschnittsweise eine gerade, eine Parabel oder eine Teilkreisform.

Zumindest eine der zuvor genannten Aufgaben wird auch durch ein Verfahren gelöst, so wie es in dem beigefügten, darauf gerichteten unabhängigen Anspruch definiert ist. Dazu weist das Verfahren der eingangs genannten Art weiterhin die Schritte auf: Simulieren eines ersten Referenzbilddatensatzes aus einem Datenmodell des Prüfkörpers, wobei das Simulieren eine Beleuchtung des Prüfkörpers aus der ersten Beleuchtungsrichtung und eine Beleuchtung des Prüfkörpers aus der zweiten Beleuchtungsrichtung und eine Bilderfassung aus der ersten Beobachtungsrichtung berücksichtigt, und Erzeugen eines Fehlersignals aus einem Vergleich eines das erste Bild beschreibenden ersten Bilddatensatzes mit dem ersten Referenzbilddatensatz.

Soweit im Folgenden Aspekte der Erfindung im Hinblick auf das Verfahren beschrieben werden, so gelten diese auch für das entsprechende System zum Prüfen einer Oberfläche eines Prüfkörpers und umgekehrt. Soweit das Verfahren mit einem System gemäß dieser Erfindung ausgeführt wird, so weist das System entsprechende Einrichtungen hierfür auf. Insbesondere sind Ausführungsformen des Systems zum Ausführen der hier beschriebenen Ausführungsformen des Verfahrens geeignet.

In einer Ausführungsform der Erfindung erfolgt das Beleuchten des Prüfkörpers mit der ersten elektromagnetischen Strahlung und der zweiten elektromagnetischen Strahlung gleichzeitig, wobei der erste Wellenlängenbereich und der zweite Wellenlängenbereich voneinander verschieden sind.

Gemäß einer Ausführungsform des erfindungsgemäßen Verfahrens umfasst das Erfassen des ersten Bildes des Prüfkörpers zu einem ersten Erfassungszeitpunkt den Schritt: Erfassen zumindest einer Position oder einer Orientierung des Prüfkörpers zu dem ersten Entlassungszeitpunkt, wobei das Simulieren des ersten Referenzbilddatensatzes zumindest die Position oder die Orientierung des Prüfkörpers zum ersten Entlassungszeitpunkt berücksichtigt.

In einer Ausführungsform der Erfindung umfasst der Prüfkörper ein Metall oder einen Kunststoff, wobei das erfindungsgemäße Verfahren zum Erfassen einer Ungänze auf der Oberfläche dient. Ein Beispiel für eine solche Ungänze ist eine Schlagstelle, eine Unterfüllung oder eine andere Verformung der Oberfläche, die nicht erwünscht ist.

Insbesondere ist das erfindungsgemäße Verfahren zum Prüfen einer Oberfläche eines Metall- oder Kunststoffgussteils sowie eines Metallschmiedeteils geeignet.

Weitere Vorteile, Merkmale und Anwendungsmöglichkeiten der vorliegenden Erfindung werden anhand der folgenden Beschreibung einer Ausführungsform und der dazugehörigen Figuren deutlich. In den Figuren sind gleiche Elemente mit gleichen Bezugszeichen bezeichnet.

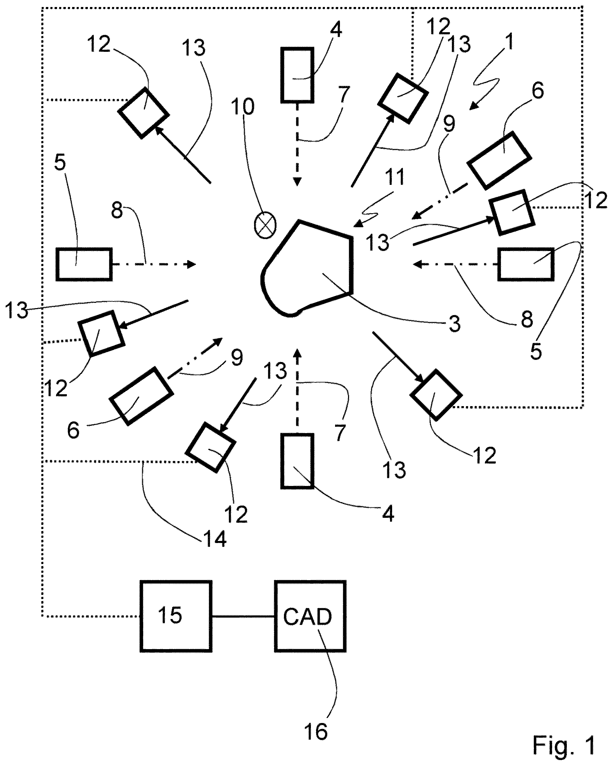

- Figur 1: ist eine schematische Draufsicht von oben auf ein erfindungsgemäßes System zum Prüfen einer Oberfläche eines Prüfkörpers.

Figur 1 ist eine schematische Draufsicht von oben auf ein erfindungsgemäßes System 1 zum Prüfen einer Oberfläche 2 eines Prüfkörpers 3. Bei dem in Figur 1 dargestellten und im Folgenden beispielhaft beschriebenen System 1 handelt es sich um eine Freifallanordnung, bei welcher die einzelnen Prüfkörper 3 im freien Fall eine Prüfstrecke 10 entlang fallen. Die Prüfstrecke 10 verläuft dabei senkrecht zur Darstellungsebene aus Figur 1. Durch eine solche Freifallanordnung kann die Oberfläche 2 der einzelnen Prüfkörper 3 vollständig, d.h. auf allen Seiten geprüft werden. Es gibt anders als beispielsweise bei einer Anordnung mit einem Förderband keinen Oberflächenabschnitt, der prinzipiell nicht geprüft werden kann oder für eine Prüfung eine weitere Handhabung des Prüfkörpers 3 erfordert.

Die Darstellungsebene aus Figur 1 zeigt den Prüfkörper 3 an einem Prüfpunkt 11 auf der Prüfstrecke 10. Alle Quellen 4, 5, 6 für die Beleuchtung und alle Kameras 12 für die Aufnahme von Bildern der Oberfläche 2 des Prüfkörpers 3 sind so angeordnet, dass sie den Prüfkörper 3 an diesem Prüfpunkt 11 beleuchten bzw. erfassen.

In der dargestellten Ausführungsform weist das System 1 insgesamt sechs Quellen 4, 5, 6 für elektromagnetische Strahlung, welche den Prüfkörper 3 beleuchtet, auf. Dabei erzeugen die mit dem Bezugszeichen 4 bezeichneten Quellen elektromagnetische Strahlung 7 im roten Wellenlängenbereich und strahlen diese ab. Diese roten Quellen 4 werden auch als erste Quellen bezeichnet und emittieren erste elektromagnetische Strahlung 7. Die mit dem Bezugszeichen 5 bezeichneten Quellen erzeugen elektromagnetische Strahlung 8 im grünen Wellenlängenbereich und strahlen diese ab. Diese grünen Quellen 5 werden auch als zweite Quellen bezeichnet und emittieren zweite elektromagnetische Strahlung 8. Die mit dem Bezugszeichen 6 bezeichneten Quellen erzeugen elektromagnetische Strahlung 9 im blauen Wellenlängenbereich und strahlen diese ab. Diese blauen Quellen 6 werden auch als dritte Quellen bezeichnet und emittieren dritte elektromagnetische Strahlung 9.

In der dargestellten Ausführungsform sind Quellen gleicher Farbe um 180° versetzt, d.h. einander gegenüberliegend angeordnet. Durch die Farbcodierung der einzelnen Quellen 4, 5, 6 können diese den Prüfkörper 3 gleichzeitig beleuchten und dennoch ist aus jeder Beobachtungsrichtung 13 der Kameras 12 nachvollziehbar, welcher Oberflächenabschnitt primär welche elektromagnetische Strahlung 7, 8, 9 in der Beobachtungsrichtung 13 der jeweiligen Kamera 12 reflektiert oder streut. Um diese "Unterscheidbarkeit" der jeweiligen Quelle 4, 5, 6, von welcher die von der Kamera 12 erfasste Strahlung 7, 8, 9 stammt, zu gewährleisten, sind die Quellen 4, 5, 6 so ausgestaltet, dass die abgestrahlte elektromagnetische Strahlung 7, 8, 9 weitgehend gerichtet ist.

Das System 1 aus Figur 1 umfasst sechs Kameras, die alle voneinander verschiedene Beobachtungsrichtungen 13 aufweisen. Auf diese Weise erhält man Bilder des Prüfobjekts, welche zusammen das Prüfobjekt 3 von allen Seiten und damit die Oberfläche 2 des Prüfobjekts 3 vollständig zeigen. Jede der Kameras 12 ist eine handelsübliche Farbkamera. Bei jeder dieser Farbkameras wird jeder Pixel von drei Sensoren für die Grundfarben Rot, Grün und Blau (RGB-Farbraum) gebildet.

Jede der Kameras 12 ist über eine Signalleitung 14 mit einem Rechner 15 als Auswertungseinrichtung verbunden. Um herauszufinden, ob der Prüfkörper 3 Ungänzen an seiner Oberfläche 2 aufweist, läuft auf dem Rechner 15 ein Datenverarbeitungsprogramm ab, welches jedes der von den sechs Kameras 12 aufgenommene Bild bzw. den das jeweilige Bild beschreibenden Bilddatensatz mit einem Referenzbilddatensatz vergleicht.

Der Prüfkörper 3 kann auf seiner Flugstrecke jede beliebige Orientierung relativ zu den Kameras 12 einnehmen. Zudem kann die Position des jeweiligen Prüfkörpers 3 gegenüber den Kameras 12 zum Erfassungszeitpunkt von Prüfkörper 3 zu Prüfkörper 3 verschieden sein. Daher wertet der Rechner 15 zunächst einmal die von den einzelnen Kameras 12 erzeugten Graustufenbilder aus und bestimmt die Pose, d. h. Position und Orientierung, des jeweiligen Prüfkörpers 3 zum Erfassungszeitpunkt.

Das Datenverarbeitungsprogramm simuliert in einem nächsten Schritt für die zuvor berechnete Pose des Prüfkörpers aus einem CAD-Modell 16 des Prüfkörpers durch Raytracing wie ein zu erwartendes erstes Bild des Prüfobjekts 3, welches die erste Kamera 12 erfassen würde, idealerweise aussieht. Diese simulierte, zu erwartende Bild wird als erster Referenzbilddatensatz beschrieben. Der so simulierte erste Referenzbilddatensatz dient dann als Basis für einen Sollwertabgleich und für die Erzeugung eines Fehlersignals. Das Fehlersignal markiert den Ort einer Abweichung zwischen dem ersten Referenzbilddatensatz und dem ersten Bilddatensatz.

Diese Art der Auswertung führt der Rechner 15 mit dem Datenverarbeitungsprogramm für jede der sechs Kameras 12 durch. Aufgrund der definierten Beleuchtungssituation mit der ersten elektromagnetischen Strahlung 7, der zweiten elektromagnetischen Strahlung 8 und der dritten elektromagnetischen Strahlung 9 aus voneinander verschiedenen Beleuchtungsrichtungen und mit voneinander verschiedenen Wellenlängenbereichen sind die Simulationen zum Generieren der Referenzbilddatensätze vergleichsweise wenig rechenintensiv. Zudem treten Abweichungen von der Sollform der Oberfläche durch die verschiedenen Wellenlängenbereiche deutlich hervor.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: System
- 2: Oberfläche
- 3: Prüfkörper
- 4: rote, erste Quelle
- 5: grüne, zweite Quelle
- 6: blaue, dritte Quelle
- 7: rote, erste elektromagnetische Strahlung
- 8: grüne, zweite elektromagnetische Strahlung
- 9: blaue, dritte elektromagnetische Strahlung
- 10: Prüfstrecke
- 11: Prüfpunkt
- 12: erste bis sechste Kamera
- 13: erste bis sechste Beobachtungsrichtung
- 14: Datenleitung
- 15: Rechner
- 16: CAD-Modell

## Patentansprüche

1. System (1) zum Prüfen einer Oberfläche (2) eines Prüfkörpers (3), wobei das System (1) aufweist
eine erste Quelle (4) und eine zweite Quelle (5),
wobei die erste Quelle (4) und die zweite Quelle (5) derart ausgestaltet sind, dass die erste Quelle (4) in einem Betrieb des Systems eine erste elektromagnetische Strahlung (7) in einem ersten Wellenlängenbereich erzeugt und abstrahlt und die zweite Quelle (5) in dem Betrieb des Systems eine zweite elektromagnetische Strahlung (8) in einem zweiten Wellenlängenbereich erzeugt und abstrahlt,
wobei die erste Quelle (4) derart angeordnet ist, dass die erste Quelle (4) in dem Betrieb des Systems (1) den Prüfkörper (3) aus einer ersten Beleuchtungsrichtung beleuchtet,
wobei die zweite Quelle (5) derart angeordnet ist, dass die zweite Quelle (5) in dem Betrieb des Systems (1) den Prüfkörper (3) aus einer zweiten Beleuchtungsrichtung beleuchtet, und
wobei die erste und die zweite Beleuchtungsrichtung voneinander verschieden sind,
eine erste Kamera (12) zum Erfassen eines ersten Bildes des Prüfkörpers (3) aus einer ersten Beobachtungsrichtung (13) und
eine Auswertungseinrichtung (15),
wobei die Auswertungseinrichtung (15) derart wirksam mit der ersten Kamera (12) verbunden ist, dass die Auswertungseinrichtung (15) in dem Betrieb des Systems (1) einen das von der ersten Kamera (12) erfasste erste Bild beschreibenden ersten Bilddatensatz erhält,
**dadurch gekennzeichnet, dass**
die Auswertungseinrichtung (15) derart eingerichtet ist, dass die Auswertungseinrichtung (15) in dem Betrieb des Systems (1)
aus einem Datenmodel des Prüfkörpers (3) einen ersten Referenzbilddatensatz simuliert, der eine Beleuchtung des Prüfkörpers (3) aus der ersten Beleuchtungsrichtung und eine Beleuchtung des Prüfkörpers (3) aus der zweiten Beleuchtungsrichtung und eine Bilderfassung aus der ersten Beobachtungsrichtung (13) berücksichtigt, und
ein erstes Fehlersignal aus einem Vergleich zwischen dem ersten Bilddatensatz und dem ersten Referenzbilddatensatz erzeugt.

2. System (1) nach einem der vorhergehenden Ansprüche, wobei das System (1) eine dritte Quelle aufweist,
wobei die dritte Quelle (6) derart ausgestaltet ist, dass die dritte Quelle (6) in dem Betrieb des Systems eine dritte elektromagnetische Strahlung (9) in einem dritten Wellenlängenbereich erzeugt und abstrahlt,
wobei die dritte Quelle (6) derart angeordnet ist, dass die dritte Quelle (6) in dem Betrieb des Systems (1) den Prüfkörper (3) aus einer dritten Beleuchtungsrichtung beleuchtet, und
wobei die dritte Beleuchtungsrichtung von der ersten und der zweiten Beleuchtungsrichtung verschieden ist.

3. System (1) nach dem vorhergehenden Anspruch, wobei das System (1) derart ausgestaltet ist, dass die erste elektromagnetische Strahlung (7) und die zweite elektromagnetische Strahlung (8) und optional die dritte elektromagnetische Strahlung (9) voneinander unterscheidbar sind.

4. System (1) nach einem der vorhergehenden Ansprüche, wobei der erste Wellenlängenbereich und der zweite Wellenlängenbereich und optional der dritte Wellenlängenbereich voneinander verschieden sind.

5. System (1) nach dem vorhergehenden Anspruch, wobei die erste Kamera (12) eine Farbkamera mit einer Mehrzahl von Pixeln ist, wobei jeder aus der Mehrzahl von Pixeln einen ersten für einen ersten Sensorwellenlängenbereich sensitiven Sensor und einen zweiten für einen zweiten Sensorwellenlängenbereich sensitiven Sensor aufweist, wobei der erste Sensorwellenlängenbereich und der zweite Sensorwellenlängenbereich voneinander verschieden sind, wobei der erste Wellenlängenbereich zumindest abschnittsweise von dem ersten Sensorwellenlängenbereich umfasst ist und wobei der zweite Wellenlängenbereich zumindest abschnittsweise von dem zweiten Sensorwellenlängenbereich umfasst ist.

6. System (1) nach einem der vorhergehenden Ansprüche, wobei das System eine zweite Kamera (12) zum Erfassen eines zweiten Bildes des Prüfkörpers (3) aus einer zweiten Beobachtungsrichtung (13) aufweist,
wobei die zweite Beobachtungsrichtung (13) von der ersten Beobachtungsrichtung (13) verschieden ist,
wobei die Auswertungseinrichtung (15) derart wirksam mit der zweiten Kamera (12) verbunden ist, dass die Auswertungseinrichtung (15) in dem Betrieb des Systems (1) einen das von der zweiten Kamera (12) erfasste zweite Bild beschreibenden zweiten Bilddatensatz erhält,
wobei die Auswertungseinrichtung (15) derart eingerichtet ist, dass die Auswertungseinrichtung (15) in dem Betrieb des Systems (1)
aus dem Datenmodel des Prüfkörpers (3) einen zweiten Referenzbilddatensatz simuliert, der die Beleuchtung des Prüfkörpers (3) aus der ersten Beleuchtungsrichtung, die Beleuchtung des Prüfkörpers aus der zweiten Beleuchtungsrichtung und eine Bilderfassung aus der zweiten Beobachtungsrichtung (13) berücksichtigt und
ein zweites Fehlersignal aus einem Vergleich zwischen dem zweiten Bilddatensatz und dem zweiten Referenzbilddatensatz erzeugt.

7. System (1) nach einem der vorhergehenden Ansprüche, wobei das System (1) eine Einrichtung zum Erfassen zumindest einer Position oder einer Orientierung des Prüfkörpers (3) relativ zu der ersten Kamera (12) aufweist,
wobei die Auswertungseinrichtung (15) derart wirksam mit der Einrichtung zum Erfassen zumindest der Position oder der Orientierung des Prüfkörpers (3) verbunden ist, dass die Auswertungseinrichtung (15) in dem Betrieb des Systems (1) eine Information über zumindest die Position oder die Orientierung des Prüfkörpers (3) zu einem ersten Erfassungszeitpunkt des ersten Bildes erhält, und wobei die Auswertungseinrichtung (15) derart eingerichtet ist, dass die Auswertungseinrichtung (15) in dem Betrieb des Systems (1) den ersten Referenzbilddatensatz simuliert, wobei die Information über zumindest die Position oder die Orientierung des Prüfkörpers (3) zu dem ersten Erfassungszeitpunkt berücksichtigt ist.

8. System (1) nach einem der vorhergehenden Ansprüche, wobei das Datenmodel des Prüfkörpers (3) ein CAD-Model ist.

9. System (1) nach dem vorhergehenden Anspruch, wobei das System (1) eine Prüfstrecke (10) mit zumindest einem auf der Prüfstrecke (10) angeordneten Prüfpunkt (11) und eine Prüfkörperzufuhreinheit aufweist,
wobei die Prüfkörperzufuhreinheit derart eingerichtet ist, dass sie in dem Betrieb den Prüfkörper (3) der Prüfstrecke (10) zuführt, so dass sich der Prüfkörper auf der Prüfstrecke (10) bewegt,
wobei die erste Quelle (4) und die zweite Quelle (5) derart eingerichtet und angeordnet sind, dass sie in dem Betrieb des Systems (1) den Prüfkörper (3) zumindest an dem Prüfpunkt (11) mit der ersten elektromagnetischen Strahlung (7) und der zweiten elektromagnetischen Strahlung (8) beleuchten,
wobei die erste Kamera (12) und die zweite Kamera (12) derart eingerichtet und angeordnet sind, dass sie in dem Betrieb des Systems (1) den Prüfkörper (3) zumindest an dem Prüfpunkt (11) aus der ersten Beobachtungsrichtung (13) und der zweiten Beobachtungsrichtung (13) erfassen.

10. System (1) nach dem vorhergehenden Anspruch, wobei das System ein Transportband umfasst, wobei der Prüfkörper (3) auf dem Transportband anordenbar ist und wobei das Transportband derart ausgestaltet und angeordnet ist, dass es in dem Betrieb des Systems den Prüfkörper (3) entlang der Prüfstrecke (10) führt.

11. System (1) nach Anspruch 9, wobei die Objektzuführeinheit ein Fördermittel aufweist, wobei das Fördermittel ein Abwurfende aufweist, so dass der Prüfkörper (3) in dem Betrieb des Systems (1) die Prüfstrecke (10) entlang fliegt.

12. Verfahren zum Prüfen einer Oberfläche (2) eines Prüfkörpers (3), wobei das Verfahren die Schritte umfasst
Beleuchten des Prüfkörpers (3) mit einer ersten elektromagnetischen Strahlung (7) in einem ersten Wellenlängenbereich aus einer ersten Beleuchtungsrichtung,
Beleuchten des Prüfkörpers (3) mit einer zweiten elektromagnetischen Strahlung (8) in einem zweiten Wellenlängenbereich aus einer zweiten Beleuchtungsrichtung,
wobei die erste und die zweite Beleuchtungsrichtung voneinander verschieden sind, und
Erfassen eines ersten Bildes des Prüfkörpers (3) aus einer ersten Beobachtungsrichtung (13),
**dadurch gekennzeichnet, dass** das Verfahren weiterhin die Schritte aufweist
Simulieren eines ersten Referenzbilddatensatzes aus einem Datenmodel des Prüfkörpers (3), wobei das Simulieren eine Beleuchtung des Prüfkörpers (3) aus der ersten Beleuchtungsrichtung und eine Beleuchtung des Prüfkörpers (3) aus der zweiten Beleuchtungsrichtung und eine Bilderfassung aus der ersten Beobachtungsrichtung (13) berücksichtigt, und
Erzeugen ein erstes Fehlersignals aus einem Vergleich eines das erste Bild beschreibenden ersten Bilddatensatzes mit dem ersten Referenzbilddatensatz.

13. Verfahren nach dem vorhergehenden Anspruch, wobei das Beleuchten des Prüfkörpers (3) mit der ersten elektromagnetischen Strahlung (7) und der zweiten elektromagnetischen Strahlung (8) gleichzeitig erfolgt und wobei der erste Wellenlängenbereich und der zweite Wellenlängenbereich voneinander verschieden sind.

14. Verfahren nach Anspruch 12 oder 13, wobei das Erfassen des ersten Bildes des Prüfkörpers (3) zu einem ersten Erfassungszeitpunkt erfolgt, wobei das Verfahren zusätzlich den Schritt umfasst
Erfassen zumindest einer Position oder einer Orientierung des Prüfkörpers (3) zu dem ersten Erfassungszeitpunkt und
wobei das Simulieren des ersten Referenzbilddatensatzes zumindest die Position oder die Orientierung des Prüfkörpers (3) zu dem ersten Erfassungszeitpunkt berücksichtigt.

15. Verfahren nach einem der Ansprüche 12 bis 14, wobei der Prüfkörper (3) ein Metall oder einen Kunststoff umfasst und wobei das Verfahren das Fehlersignal erzeugt, wenn die Oberfläche des Prüfkörpers (3) eine Ungänze aufweist.
